**Europäisches Patentamt**

**European Patent Office**

**Office européen des brevets**

(19)

(11) Veröffentlichungsnummer: **0 134 525 B1**

(12) **EUROPÄISCHE PATENTSCHRIFT**

(45) Veröffentlichungstag der Patentschrift:
**29.10.86**

(21) Anmeldenummer: **84108773.7**

(22) Anmeldetag: **25.07.84**

(51) Int. Cl.⁴: **H 01 B 17/26, H 02 B 1/00, H 01 F 27/04**

(54) **Elektrische Hochspannungsdurchführung für ein in einem Gehäuse eingeschlossenes elektrisches Gerät.**

(30) Priorität: **04.08.83 SE 8304264**

(43) Veröffentlichungstag der Anmeldung:
**20.03.85 Patentblatt 85/12**

(45) Bekanntmachung des Hinweises auf die Patenterteilung:
**29.10.86 Patentblatt 86/44**

(84) Benannte Vertragsstaaten:
**DE FR GB**

(56) Entgegenhaltungen:
**CH - A - 430 823**
**DE - A - 3 211 089**
**FR - A - 2 392 487**
**US - A - 3 258 524**

(73) Patentinhaber: **ASEA AB, S-721 83 Västeras (SE)**

(72) Erfinder: **Beijar, Ole, Ratallsvägen 19, S-771 00 Ludvika (SE)**
Erfinder: **Mattsson, Mats, Dipl.-Ing., Rotorvägen 32, D-771 00 Ludvika (SE)**

(74) Vertreter: **Boecker, Joachim, Dr.-Ing., Rathenauplatz 2-8, D-6000 Frankfurt a.M. 1 (DE)**

## Beschreibung

Die vorliegende Erfindung betrifft eine elektrische Hochspannungsdurchführung gemäss dem Oberbegriff des Anspruches 1.

Eine solche Durchführung ist bekannt aus der veröffentlichten japanischen Patentanmeldung JP-A-56-46860 ($\triangleq$ DE-A-3 211 089).

Die Durchführung gemäss der Erfindung ist vorzugsweise vorgesehen für Betriebsspannungen über 200 kV.

Untersuchungen haben ergeben, dass die mechanischen Spannungen, welchen eine Transformatordurchführung der vorgenannten Art bei Erdbeben ausgesetzt wird, meistens auf annehmbare Werte begrenzt bleiben, wenn die Eigenfrequenz der Durchführung ca. 1 Hz beträgt. Eine Durchführung, auf die sich die Erfindung bezieht, hat eine Eigenfrequenz im Bereich von 0,3 bis 3 Hz, vorzugsweise in dem Bereich von 0,6 bis 1,5 Hz.

Der Erfindung liegt die Aufgabe zugrunde eine Hochspannungsdurchführung der eingangs genannten Art zu entwickeln, welche derart ausgebildet ist, dass bei einem Erdbeben und einer Eigenschwingungsfrequenz in der Nähe von 1 Hz die Schwingungsbewegungen und axialen Bewegungen der Durchführung derart abgefangen werden, dass sie zu keinen schädlichen mechanischen Beanspruchungen an dem im Gehäuse befindlichen elektrischen Gerät, insbesondere an den Hauptanzapfungen oder den hieran angeschlossenen Wicklungsabschnitten eines Transformators, führen können.

Zur Lösung dieser Aufgabe wird eine Hochspannungsdurchführung gemäss dem Oberbegriff des Anspruches 1 vorgeschlagen, die erfindungsgemäss die im kennzeichnenden Teil des Anspruches 1 genannten Merkmale hat.

Vorteilhafte Ausgestaltungen der Erfindung sind in den weiteren Ansprüchen genannt.

Anhand des in den Figuren gezeigen Ausführungsbeispiels soll die Erfindung näher erläutert werden. Es zeigen:

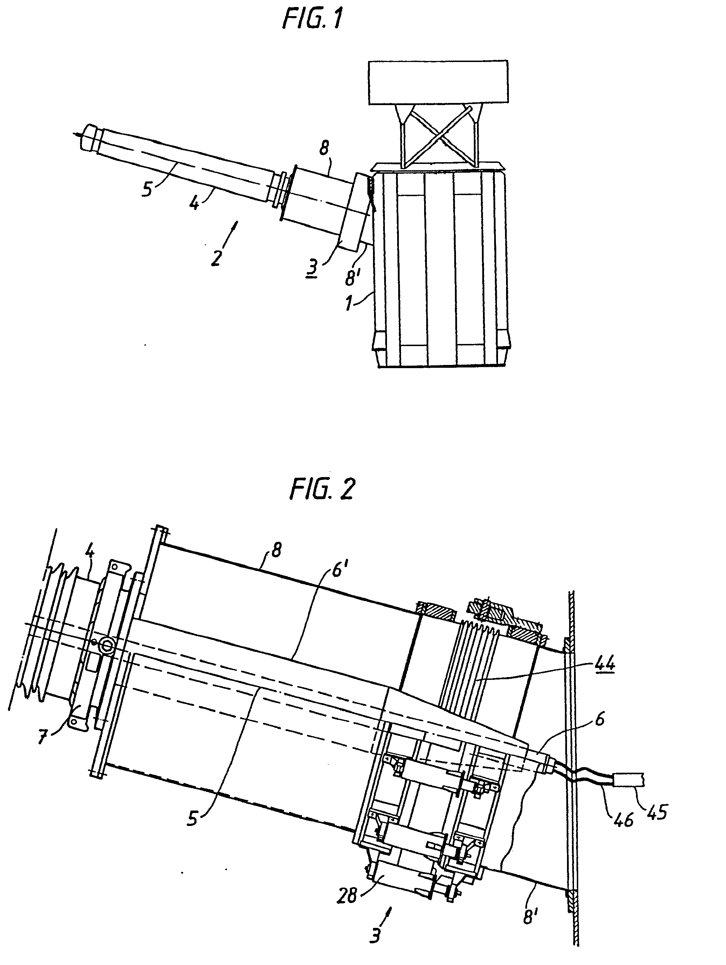

Fig. 1 eine Seitenansicht eines Transformators, der mit einer Durchführung gemäss der Erfindung ausgerüstet ist,

Fig. 2 ein Detail der Durchführung des in Fig. 1 dargestellten Transformators, zum Teil in Seitenansicht und zum Teil im Axialschnitt längs einer in Längsrichtung verlaufenden Symmetrieachse der Durchführung,

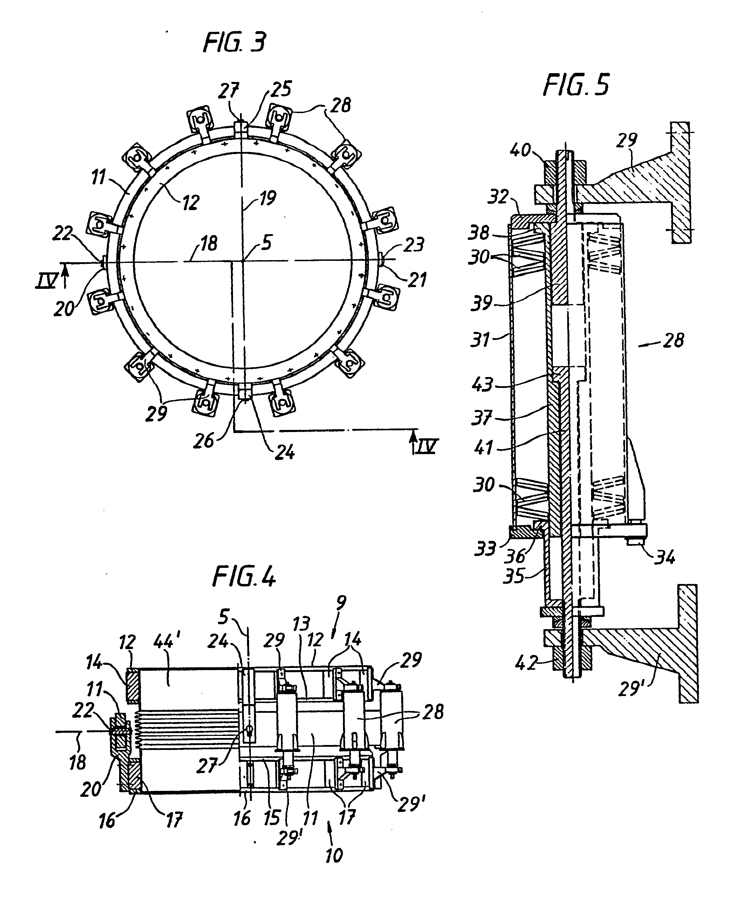

Fig. 3 eine Ansicht in Achsrichtung eines flexiblen Zwischenflansches, der zu der in den Fig. 1 und 2 gezeigten Durchführung gehört,

Fig. 4 den Zwischenflansch gemäss Fig. 3 teils in Seitenansicht und teils im Schnitt längs der Linie IV-IV in Fig. 3,

Fig. 5 eine langgestreckte im wesentlichen kreiszylindrische Federvorrichtung teils in Seitenansicht und teils im Schnitt längs einer in Längsrichtung der Federvorrichtung verlaufenden Mittellinie.

In den Figuren bezeichnet 1 einen ölgefüllten Transformatorkessel und 2 eine an diesem befestigte Durchführung, die einen an dem Transformatorkessel befestigten flexiblen Zwischenflansch 3 enthält. Die Durchführung 2 enthält ein Porzellanrohr 4 mit einer in Längsrichtung verlaufenden Symmetrieachse 5. Das Porzellanrohr 4 umschliesst einen koaxial angeordneten Leiter 6 sowie einen diesen umschliessenden Kondensatorkörper 6'. Eine metallische Hülse 7 ist mit dem Porzellanrohr 4 an dessen unterem Ende mechanisch verbunden.

Die Hülse 7 ist an dem äusseren Ende eines festen, metallischen, im wesentlichen hohlzylindrischen Körpers 8 festgeflanscht, der an seinem zum Transformatorkessel gerichteten Ende an den flexiblen Zwischenflansch 3 festgeflanscht ist. Dieser ist mit einer Wand des Transformatorkessels 1 mechanisch mittels einer metallischen, schräg zu seiner Längsachse endenden Hohlyzlinder 8 verbunden, der durch ein Loch in der Wand des Transformatorkessels in hydraulischer Verbindung mit einem von dem Transformatorkessel 1 begrenzten ölgefüllten Raum steht. Im Transformatorkessel 1 befindet sich ein mit Wicklungen versehener Eisenkern. Der Leiter 6 ist mittels einer elektrischen Verbindung 46 an eine Hochspannungswicklung 45 angeschlossen.

Der flexible Zwischenflansch 3 enthält eine an der Hülse bzw. dem Körper 8 befestigte axial äussere ringförmige Anordnung 9, eine an dem Transformatorkessel befestigte axial innere ringförmige Anordnung 10 sowie einen dazwischenliegenden Verbindungsring 11. Die beiden Anordnungen 9 und 10 sind hinsichtlich Form und Grösse im wesentlichen untereinander gleich und sind zusammen mit dem Verbindungsring 11 etwa koaxial zu der Symmetrieachse angeordnet. Die ringförmige Anordnung 9 enthält zwei kreisförmige und untereinander parallele Stahlringe 12 und 13, die mittels mehrerer axial gerichteter, über den Umfang verteilter Stahlstäbe 14, die zwischen den Ringen 12 und 13 festgeschweisst sind, fest miteinander verbunden sind. Die ringförmige Anordnung 10 enthält in gleicher Weise zwei kreisförmige Stahlringe 15 und 16 und mehrere zwischen diesen festgeschweisste, axial verlaufende Stahlstäbe 17.

Der Verbindungsring 11 ist so angeordnet, dass er sowohl um eine Rotationsachse 18 wie um eine Rotationsachse 19 drehbar ist. Die beiden Rotationsachsen 18 und 19 liegen in derselben Ebene, bilden einen Winkel von 90° miteinander und stehen senkrecht zur Symmetrieachse 5. Die Drehbarkeit um die Rotationsachse 18 erhält man mit Hilfe einer Lageranordnung, die über den festen Metallflansch 8' an dem Transformatorkessel 1 befestigt ist. Zu der Lageranordnung gehört die ringförmige Anordnung 10, zwei an dieser befestigte, diametral zueinander angeordnete zweiarmige Gabeln 20 und 21 sowie zwei zur Rotationsachse 18 koaxiale kreiszylindrische Zapfen 22 und 23, die von den Gabeln 20 bzw. 21 getragen werden. Der Verbindungsring hat zwei diametral zueinander angeordnete Löcher, die mit einem nur für die Drehbarkeit erforderlichen Spiel je einen Zapfen 22 aufnehmen.

In entsprechender Weise ist eine Lageranordnung für den Verbindungsring in fester mechanischer Verbindung mit dem Porzellanrohr 4 angeordnet. Diese Lageranordnung besteht aus der ringförmigen Anordnung 9 und zwei an dieser diametral zueinander befestigter Gabeln 24 und 25, welche kongruent mit den Gabeln 20 und 21 sind und mit kreiszylindrischen Zapfen 26 bzw. 27 versehen sind, die koaxial zur Rotationsachse 19 angeordnet und in gleicher Weise wie die Zapfen 22 und 23 in je ein zugeordnetes Loch in dem Kardanring eingeführt sind. Bei jeder der Gabeln 21, 22, 24 und 25 ist der Mindestabstand zwischen den Gabelarmen etwas grösser als die Dicke des gleichmässig dicken Verbindungsringes 11. Der Armabstand wird in Richtung des freien Armendes grösser und ist an den äusseren Enden der Arme am grössten.

Der flexible Zwischenflansch 3 enthält eine Federvorrichtung, die aus zwölf langgestreckten, parallel zu der Symmetrieachse 5 gerichteten, untereinander gleichen Federeinheiten 28 besteht, die gleichmässig über den Umfang des flexiblen Zwischenflansches 3 verteilt sind. Jede Federeinheit 28 ist mit jedem Ende an der entsprechenden ringförmigen Anordnung 9 bzw. 10 mittels je einer an der ringförmigen Anordnung fixierten Konsole 29 bzw. 29' befestigt. Die Rotationsachse 18 verläuft horizontal, was unter normalen Verhältnissen (kein Erdbeben) bedeutet, dass die sechs oberen Federeinheiten mit Zugkräften und die sechs unteren mit Druckkräften belastet sind.

Die Federeinheit 28 enthält mehrere mit zentralen durchgehenden Löchern versehene Tellerfedern 30, die in ein kreiszylindrisches Rohr 31 angeordnet sind, welches an seinem einen Ende durch eine angeschweisste Platte verschlossen ist und an seinem anderen Ende durch einen Deckel 33 verschlossen ist, der durch mehrere Schraubbolzen 34 gehalten wird. Der Deckel 33 hat ein durchgehendes kreisförmiges Loch, in welchem ein topfähnlicher Führungskörper 35 mit kreisförmigem Querschnitt mit einem ein Gleiten erlaubenden Spiel angebracht ist. Die Bewegungsfreiheit des Führungskörpers 35 in Längsrichtung der Federeinheit wird durch einen an der oberen Kante des Führungskörpers vorhandenen Flansch 36 begrenzt. Ein durch die Tellerfedern 30 verlaufendes Zugrohr 37 mit kreisförmigem Querschnitt ragt mit seinem einen Ende mit geeignetem Spiel in den Führungskörper 35 hinein. Das Zugrohr 37 hat an seinem anderen Ende einen Flansch 38, der von den Tellerfedern 30 gegen die Platte 32 gedrückt wird. Ferner ist ein Führungsbolzen 39 vorhanden, dessen im Durchmesser stärkerer Abschnitt mit geeignetem Spiel in das Zugrohr 37 hineinragt, und dessen im Durchmesser kleinerer Abschnitt durch die Endplatte 32 und die Konsole 29 verläuft, an welcher er mit Hilfe einer Mutter 40 befestigt ist. Ein Zugbolzen 41 ist mit geeignetem Spiel in dem Zugrohr 37 angeordnet und ragt mit seinem einen Ende durch ein Loch im Boden des Führungskörpers 35 und durch ein Loch in der Konsole 29' an welcher er mittels einer Mutter 42 befestigt ist.

Der Zugbolzen 41 hat einen kreiszylindrischen Abschnitt 43, dessen Durchmesser so bemessen ist, dass dieser Abschnitt beim Aufbringen einer Zugkraft auf den Zugbolzen 41 an einer ringförmigen axial gerichteten Anschlagfläche des Zugrohres 37 anliegt. Die Bauelemente 30, 31, 35, 37, 39, 41 sind alle koaxial zueinander angeordnet.

Bei einer Zugkraftbelastung der Federeinheit 28 wird die Zugkraft über die Zugstange 41 auf das Zugrohr 37 übertragen, wobei dieses weiter in den Führungskörper 35 hineingeschoben wird, während der Flansch 38 die Tellerfedern 30 zusammenpresst. Wenn der Grad des Zusammenpressens den maximal zulässigen Wert erreicht, bis zu dem eine bleibende Verformung der Tellerfedern 30 vermieden wird, wird ein weiteres Zusammenpressen dadurch verhindert, dass das eine Ende des Zugrohres 37 gegen den Boden des Führungskörpers 35 anschlägt.

Wird die Federeinheit 28 einer Druckbelastung ausgesetzt, so wird der Führungskörper 35 durch die Öffnung in den Deckel 33 hineingepresst, wobei die Druckkraft über den Flansch 36 auf die Tellerfedern übertragen wird und diese zusammenpresst. Wenn sich der Grad der Zusammenpressung dem maximal zugelassenen Wert nähert, wird ein weiteres Zusammenpressen dadurch verhindert, dass der Boden des Führungskörpers 35 gegen die eine Stirnfläche des Zugrohres 37 anschlägt.

Der flexible Zwischenflansch 3 ist mit einem Balgen 44 aus rostfreiem Stahl versehen. Der Balgen hat zwei hohlzylindrische Abschnitte 44' und 44'' und einen dazwischenliegenden gewellten Abschnitt 44'''. Der Balgen 44 ist mit seinen Enden an den ringförmigen Anordnungen 9 bzw. 10 befestigt und bildet zwischen diesen eine druckdichte hydraulische Verbindung, mit deren Hilfe der Körper 8 mit dem Hohlzylinder 8' verbunden ist.

Das Spiel zwischen den Zapfen 22, 23, 26, 27 und den entsprechenden Löchern des Verbindungsringes ist jeweils so klein, dass keine wesentliche Bewegung des Porzellanrohres 4 in seiner Längsrichtung stattfinden kann.

## Patentansprüche

1. Elektrische Hochspannungsdurchführung (2) für ein in einem Gehäuse (1) eingeschlossenes elektrisches Gerät mit einem langgestreckten Rohr (4) aus elektrisch isolierendem Material, mit einem langgestreckten, von dem Rohr (4) umschlossenen Leiter (6), welcher elektrisch an das genannte elektrische Gerät angeschlossen ist, und mit einer flexiblen Anordnung (3), mit deren Hilfe das Rohr (4) mechanisch an dem Gehäuse (1) angeordnet ist, dadurch gekennzeichnet, dass die flexible Anordnung (3) eine erste, mit dem Rohr (4) mechanisch verbundene ringförmige Anordnung (9), eine zweite, mit dem Gehäuse (1) mechanisch verbundene ringförmige Anordnung (10) und einen mit den beiden ringförmigen Anordnungen mechanisch verbundenen und etwa koaxial zu diesenn und dem Rohr (4) angeordneten Verbindungsring (11) enthält, dass der Verbindungsring (11) einerseits drehbar um eine erste, im Verhältnis zu dem Leiter (6) senkrecht gerichtete Rotationsachse (19) mittels einer an der ersten ringförmigen Anordnung (9) fixierten ersten Lageranordnung (24, 25, 26, 27) angeordnet ist und andererseits drehbar um eine zweite, im Verhältnis zu dem Leiter (6) senkrecht gerichtete Rotationsachse (18) mittels einer, an der zweiten ringförmigen Anordnung (10) fixierten zweiten Lageranordnung (20, 21, 22, 23) angeordnet ist, dass die erste Rotationsachse (19) im Verhältnis zu der zweiten Rotationsachse senkrecht verläuft und dass die ringförmigen Anordnungen (9, 10) mittels einer an ihnen befestigten Federvorrichtung (28) in elastischer mechanischer Verbindung miteinander stehen.

2. Hochspannungsdurchführung nach Anspruch 1, dadurch gekennzeichnet, dass ein Balgen (44) zwischen den beiden ringförmigen Anordnungen (9, 10) angeordnet ist, der diese druckdicht für eine hydraulische Verbindung miteinander verbindet.

3. Hochspannungsdurchführung nach einem der vorhergehenden Ansprüche, dadurch gekennzeichnet, dass die genannte Federvorrichtung aus mehreren, über den Umfang der beiden ringförmigen Anordnungen (9, 10) verteilten Federeinheiten (28) besteht, von denen jede eine elastische mechanische Verbindung zwischen der ersten ringförmigen Anordnung (9) und der zweiten ringförmigen Anordnung (10) bildet.

## Claims

1. Electrical high-voltage bushing (2) for an electrical apparatus enclosed in a casing (1), comprising an elongated tube (4) made of electrically insulating material, an elongated conductor (6), which is enclosed by said tube (4) and is electrically connected to said electrical apparatus, and a flexible device (3) with the help of which said tube (4) is mechanically connected to the casing (1), characterized in that the flexible device (3) comprises a first annular member (9) being mechanically connected to said tube (4), a second annular member (10) being mechanically connected to the casing (1), and a connection ring (11) being mechanically connected to the two annular members and being substantially coaxial thereto and to the tube (4), that the connection ring (11) on the one hand is rotatably arranged about a first rotational axis (19), which extends perpendicularly to said conductor (6), by means of a first bearing device (24, 25, 26, 27) secured to said first annular member (9), and on the other hand is rotatably arranged about a second rotational axis (18), extending perpendicularly to said conductor (6) by means of a second bearing device (20, 21, 22, 23) secured to said second annular member (10), that the first rotational axis (19) extends perpendicularly in relation to said second rotational axis, and that the annular members (9, 10) are connected with each other by a flexible mechanical connection formed by a spring device (28) secured to said annular members (9, 10).

2. High-voltage bushing according to claim 1, characterized in that a bellows (44) is arranged between the two annular members (9, 10) constituting a pressure-tight hydraulic connection between said annular members.

3. High-voltage bushing according to any of the preceding claims, characterized in that the said spring device consists of a plurality of spring units (28) spaced alaong the circumference of the two annular members (9, 10), each spring unit constituting a flexible mechanic connection between the first annular member (9) and the second annular member (10).

## Revendications

1. Traversée électrique haute tension (2) pour un appareil électrique enfermé dans un confinement (1), avec un tube allongé (4) fait avec un matériau électriquement isolant, avec un conducteur allongé (6) entouré par le tube (4) et qui est relié électriquement audit appareil électrique, et avec un dispositif flexible (3) à l'aide duquel le tube (4) est disposé mécaniquement sur le confinement, caractérisée par le fait que le dispositif flexible (3) comporte un premier dispositif (9) de forme annulaire, relié mécaniquement au tube (4), un second dispositif (10) de forme annulaire, mécaniquement relié au confinement (1), et un anneau de liaison (11), relié mécaniquement avec les deux dispositifs de forme annulaire et disposé à peu près coaxialement à ces derniers et au tube (4), que l'anneau de liaison (11) est disposé de manière à pouvoir d'une part, tourner autour d'un premier axe de rotation (19) qui est perpendiculaire au conducteur (6), à l'aide d'un premier palier (24, 25, 26, 27) fixé au premier dispositif (9) de forme annulaire, et à pouvoir tourner, d'autre part, autour d'un second axe de rotation (18), perpendiculaire au conducteur (6), à l'aide d'un second palier (20, 21, 22, 23) fixé au second dispositif (10) de forme annulaire, que le premier axe de rotation (19) s'étend perpendiculairement au second axe de rotation, et que les dispositifs (9, 10) de forme annulaire sont reliés l'un à l'autre par voie mécanique et élastique à l'aide d'un dispositif élastique (28) qui est fixé sur eux.

2. Traversée haute tension selon la revendication 1, caractérisée par le fait qu'un soufflet (44) est disposé entre les deux dispositifs (9, 10) de forme annulaire, qui relie ces derniers entre eux de manière étanche à la pression pour assurer une liaison hydraulique.

3. Traversée haute tension selon l'une des revendications précédentes, caractérisée par le fait que ledit dispositif élastique est constitué par plusieurs unités élastiques (28), réparties sur la périphérie des deux dispositifs (9, 10) de forme annulaire, et dont chacune constitue une liaison mécanique et élastique entre le premier dispositif (9) de forme annulaire et le second dispositif (10) de forme annulaire.

## FIG.1

## FIG. 2

FIG. 3

FIG. 5

FIG. 4